# EUROPEAN PATENT APPLICATION

(11) **EP 1 577 742 A1**
(43) Date of publication of application: **21.09.2005**
(21) Application number: 04251537.9
(22) Date of filing: 18.03.2004
(51) Int. Cl.: G06F 3/033

(54) **Improved optical pointing device**

(71) Applicant: STMicroelectronics Limited, Buckinghamshire SL7 1YL (GB)
(72) Inventor: Dennis, Carl, Balerno Edinburgh EH14 7HS (GB); Smith, David, Reston Eyemouth Berwickshire TD14 5JS (GB)
(74) Representative: Cooper, John

(57) **Abstract**

An optical pointing device where an optical assembly (10), comprising a lens and light guide, is formed integrally with a base or footplate (12).

## Description

The present invention relates to an improved optical pointing device.

The computer pointing device, more commonly called a computer mouse, has evolved from the older "ball mouse" to the modern "optical mouse". The optical mouse incorporates a light source and optical elements with an image sensor that can view a surface across which the mouse is to be moved.

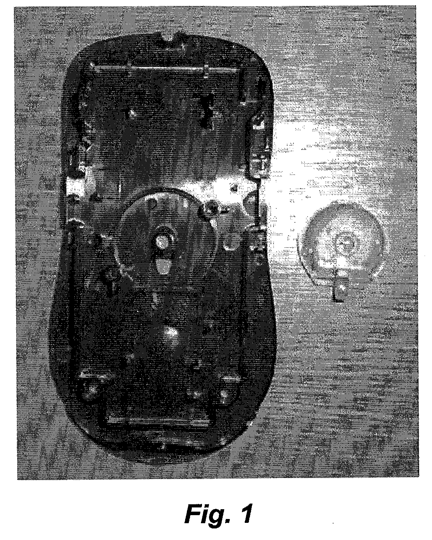

The image data is processed with a motion detection algorithm, which translates changes in the images into motion, moving the display cursor accordingly. The optical mouse illuminates the image surface through a light guide and a sensor sees the surface through a lens. A known optical assembly combines the light guide and lens into a single sub-unit, as shown in Fig.1. During the mouse assembly process the optical assembly must be located onto the mouse footplate or base.

This system necessitates the design and manufacture of 2 separate components, namely the footplate and secondly the optical assembly (lens with light guide). To successfully assemble these two distinct components, the footplate must incorporate additional features and tolerances specifically for aligning the optics.

The separate manufacture of the optical assembly and footplate results in several disadvantages, which include but are not limited to:
(1) the separate assembly of two components is costly during manufacturing;
(2) the complexity of the footplate design is increased to incorporate the optics;
(3) the lens image circle must be increased to accommodate the optics to base registration tolerances; and
(4) assembling two components always incurs a risk of error, reducing product quality.

According to a first aspect of the present invention, there is provided an optical computer pointing device as set out in the appended claim 1.

According to a second aspect of the present invention, there is provided a method of manufacturing an optical computer pointing device as set out in the appended claim 5.

The present invention will now be described by way of example only, with reference to the accompanying drawings, in which:
Fig. 1 shows a known optical computer pointing device; and
Fig. 2 shows an optical computer pointing device in accordance with an embodiment of the present invention.

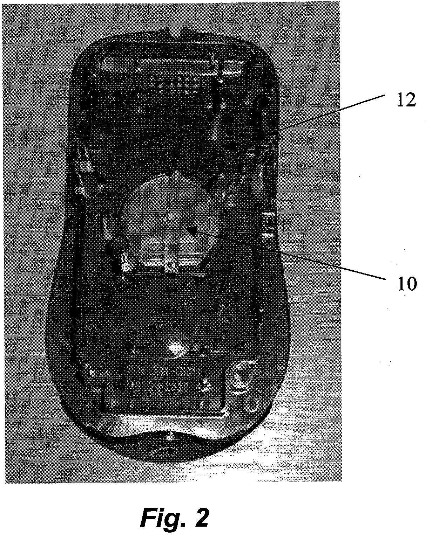

As shown in Fig. 2, the invention lies in creating the optical assembly 10 as a feature of the footplate 12, producing the two functions in a single unit.

The optical assembly 10 and the footplate 12 are designed as a single, homogenous unit and are moulded in a single operation. This system does not require assembly of separate components, which has several advantages over known two-piece designs. These advantages include but are not limited to:
(1) No redundant design effort to facilitate the combination of the separate components;
(2) Lens design is simplified because of reduction in the size of image circle - the sensor can be aligned directly to the lens;
(3) Component inventory management is improved - managing one component is simpler than two;
(4) Mouse assembly time and therefore the associated costs are reduced;
(5) Product quality is improved by eliminating the risk of misassembly. In a two-piece design, there are registration tolerances between the footplate and the optical assembly, and also between the optical assembly and the light sensors on the PCB used to process the signals. The one piece design means that the registration tolerances between the footplate and optical assembly are eliminated.
(6) The traditional mouse base with a separate optical assembly requires one larger or 2 smaller openings to permit illumination via a light guide to pass out of the mouse and, the image sensor via the lens optics to see the surface. However, these holes in the base permit dust, dirt and foreign objects to enter the mechanism. In the present invention, the light guide and lens optics are formed as an integral part of the base so holes are not required. Accordingly, ingress of dust, dirt and foreign objects into the mechanism is reduced.
(7) The optical mouse, like all other electronic devices, is susceptible to damage (in extreme cases, total failure) due to Electrostatic Discharges (ESD). ESD protection circuits are built into the sensor electronics but these offer protection only to that component and only up to a predefined threshold, for example 4KV. To further increase the threshold of damage from say 4KV (a modest discharge, induced by a person simply walking on carpet or wearing clothes containing nylon) to say 15KV (a strong discharge, possible by wearing shoes with insulating soles on a day with low humidity), optical components in a traditional mouse are extended with a flange or ring structure. In the present invention, this feature is not required because the base integrates the function. This significantly improves a product's resistance to ESD events.

Improvements and modifications can be made to the above without departing from the scope of the invention.

## Claims

1. An optical computer pointing device comprising an optical assembly integrally formed with a base member.

2. The optical computer pointing device of claim 1, wherein the optical assembly comprises a lens and a light guide.

3. The optical computer pointing device of any preceding claim, wherein the optical assembly and base member are formed from the same material.

4. A method of manufacturing an optical computer pointing device, wherein an optical assembly and base member are integrally formed as a single unit.

5. The method of claim 4, wherein the single unit is moulded in a single operation.
